# EUROPEAN PATENT APPLICATION

(11) **EP 4 442 760 A1**
(43) Date of publication of application: **09.10.2024**
(21) Application number: 22897421.8
(22) Date of filing: 11.10.2022
(51) Int. Cl.: C08L 67/02, C08L 67/04, C08L 1/12, C08L 51/08, C08L 51/00, C08L 51/06, C08K 5/134, C08K 5/103, C08J 5/18

(54) **BIODEGRADABLE MATERIAL, AND FILM PRODUCT AND APPLICATION THEREOF**

(30) Priority: 29.11.2021 CN 202111431447
(71) Applicant: Nantong Celluose Fibers Co., Ltd., Nantong, Jiangsu 226008 (CN); Zhuhai Cellulose Fibers Co., Ltd., Zhuhai, Guangdong 519050 (CN); Kunming Cellulose Fibers Co., Ltd., Kunming, Yunnan 650224 (CN)
(72) Inventor: SU, Riting, Nantong, Jiangsu 226008 (CN); YU, Xing, Nantong, Jiangsu 226008 (CN); YANG, Zhanping, Nantong, Jiangsu 226008 (CN); SU, Kai, Nantong, Jiangsu 226008 (CN); LIANG, Yinchun, Nantong, Jiangsu 226008 (CN); CHEN, Xiaolu, Nantong, Jiangsu 226008 (CN); MIAO, Jianjun, Nantong, Jiangsu 226008 (CN); SHEN, Jingjing, Nantong, Jiangsu 226008 (CN)
(74) Representative: Forresters IP LLP
(86) International application number: PCT/CN2022/124542
(87) International publication number: WO 2023/093336

(57) **Abstract**

The present invention belongs to the technical field of degradable materials and relates to a biodegradable material. Specifically, the present invention relates to a cellulose acetate-based degradable composite material and a film product thereof, and a preparation method and application thereof. The biodegradable material comprising: a) cellulose acetate and at least one biodegradable polyester material; and b) at least one compatibilizer that can improve interfacial compatibility between cellulose acetate and biodegradable polyester. The biodegradable composite material containing cellulose acetate and polyester has the beneficial effects of improving tensile strength of blends, increasing Young's modulus, and maintaining break elongation.

## Description

### FIELD OF THE INVENTION

The present invention belongs to the technical field of degradable materials and relates to a biodegradable material. Specifically, the present invention relates to a cellulose acetate-based degradable composite material and a film product thereof, and a preparation method and application thereof.

### BACKGROUND OF THE INVENTION

Plastic films are most widely used in the field of packaging, such as food, electrical products, daily necessities and clothing.

Traditional packaging materials are a mostly petroleum-based material, such as PP and PE. Many packaging materials, such as films, are difficult to degrade in an environment after use, thus have to be broken into microplastics, which are scattered in soil and water, putting pressure on environmental protection. Therefore, a ban on plastic products can control the environmental pollution caused by plastic waste.

Although a process of adding degradable materials to a polymer body material, which allows addition of inorganic salts, such as calcium carbonate, or natural polymers, such as wood flour and starch is effective to a certain extent, a petroleum-based material that is difficult to degrade still acts as a resin substrate, and small granules of non-degradable plastic residues after degradation may cause greater harm to environment. CN110330718A disclosed a fully degradable polyethylene plastic film and a preparation method thereof, the film includes polyethylene, eco-degradable plastic masterbatches, starch, nano zinc oxide, ascorbic acid, polyvinyl alcohol and cellulose acetate.

One solution absolutely solving the problem of plastic pollution is to use fully biodegradable materials such as polylactic acid (PLA) and polyhydroxyalkanoate esters (PHA). CN110511442A disclosed a formulation of a biodegradable ring plastic film based on polylactic acid (PLA) containing 15-20% of polylactic acid. CN110283343A disclosed a high-strength and high-ductility polylactic acid film material and its preparation method. CN109593333A disclosed a highly-mechanical strength and biodegradable PLA/PHBV composite material.

PBAT is a copolymer of butylene adipate and butylene terephthalate, which is a thermoplastic biodegradable plastic having the characteristics of both PBA and PBT, and advantages of good ductility and break elongation and excellent heat resistance and impact performance; in addition, it also has excellent biodegradability as a biodegradable material, which is softer when used alone, and generally used in the field of thin films by blending PBAT with PLA. CN103571158A disclosed a polylactic acid PLA/PBAT blend with high interfacial compatibility and its preparation method. CN113045879A disclosed a degradable high tear-resistance PLA-PBAT composite resin and a preparation method thereof.

Cellulose acetate is a biodegradable material made through cellulose acetylation. It can be processed into products by blending with PBAT and through modification, but the problems of poor compatibility and poor mechanical performance still exist. CN1183427A disclosed a binary or ternary blend of cellulose ester and aliphatic-aromatic copolyester, using vinyl acetate as a third component. CN107793592B disclosed a biodegradable thermoplastic polysaccharide blend toughened by aliphatic-aromatic copolyester and its preparation method, so as to solve the problems of low elongation and poor processing performance of the thermoplastic polysaccharide blend. The patent adopts a thermoplastic polysaccharide containing starch at a weight fraction more than 50%, and a gel phenomenon occurs to this component on adding a multifunctional epoxy reagent, making it impossible to make films.

However, the above solutions still do not solve the problem of poor compatibility between cellulose acetate and polyester materials. The present invention uses rigid cellulose acetate having an appropriate amount of hydroxyl on a molecular chain as a component to achieve compatibility with PBAT by reacting with a compatibilizer containing a catalyst obtained from an active functional group, improving the mechanical performance of the material while retaining the degradation properties.

### SUMMARY OF THE INVENTION

One technical problem to be solved by the present invention is to provide a modified thermos-processable material, so as to improve the compatibility between cellulose acetate and biodegradable polyester and then improve its mechanical performance.

Another technical problem to be solved by the present invention is to provide an application of the above-mentioned modified thermos-processable material in the field of degradable materials such as packaging films and mulch films.

In order to achieve the above objectives, the present invention adopts the following technical solutions.

A biodegradable material includes:
a) cellulose acetate (CA) and at least one biodegradable polyester material; and
b) at least one compatibilizer that can improve interfacial compatibility between said cellulose acetate and said biodegradable polyester.

Cellulose acetate is a biodegradable material, but it is brittle in nature, and its glass transition temperature and decomposition temperature are similar with each other, so it cannot be used though a thermal processing process. The present invention adopts one or more degradable polyester materials to modify cellulose acetate to improve its thermal processing performance. Because between cellulose acetate and polyester the polarity difference is large, and the compatibility is poor, in the present invention, a compatibilizer is added to improve the compatibility between the two through its reaction extrusion and enhance mechanical performance of a blend.

Modulus of elasticity is a physical quantity that describes the elasticity of matter, including "Young's modulus", "shear modulus", "bulk modulus", etc., and its unit is dyne per square centimeter.

In the present invention, cellulose is used as a raw material to manufacture biodegradable and processable degradable environmentally friendly plastics through acylation. Cellulose abundant in nature can be used as a raw material through purification, and it can high-efficiently prepare biodegradable environmentally-friendly cellulose-based materials that do not cause environmental pollution.

Cellulose acetate is a material that is made from natural cellulose through acetylation and can be degraded in an environment. However, the main chain of cellulose acetate is composed of 1,4-β-D- glucopyranose groups, and it is a rigid chain, in addition, a part of hydroxyl groups remains and an intramolecular and intermolecular hydrogen bond structure exists after cellulose acetylation, so that cellulose acetate cannot be directly melted and processed. Therefore, it must be plasticized with a plasticizer before it can be further processed.

The backbone of cellulose acetate is composed of 1,4-β-D- glucopyranose groups, and there are 3 hydroxyl groups at positions 2, 3, and 6 of each glucose ring that can be replaced by acetyl groups; therefore, it is possible to control the content of each substituent group according to needs, maybe between 0.1-3, and there are groups substituted by acetyl and unreacted hydroxyl groups among these hydroxyl groups.

The requirements for producing cellulose acetate are that purity of cellulose from wood or cotton is more than 90% and viscosity of cellulose is 5-10 dL/g. The viscosity of cellulose refers to its intrinsic viscosity in a cupra solution, that is, dissolving absolutely-dried cellulose in a 50% cupram water solution and preparing a solution at a concentration of 0.25%, then measuring its intrinsic viscosity by a Ughals viscometer at 25°C.

Acetic anhydride is generally used as a cellulose acylation reagent. A general process includes the steps of pretreating cellulose through activation, then adding a catalyst, generally sulfuric acid, and corresponding anhydride, next performing acylation, hydrolyzation, precipitation, washing and drying to give a finished product.

The degree of acetyl substitution of cellulose acetate ranges from 1.5 to 2.8, preferably 1.8-2.7, and more preferably 1.9-2.6. The intrinsic viscosity of the cellulose acetate is 1.2-1.8 dL/g, preferably 1.25-1.75 dL/g, and more preferably 1.35-1.7 dL/g. Its molecular weight is 10,000-120,000 Dalton, preferably 20,000-100,000 Dalton, and more preferably 25,000-90,000 Dalton.

Cellulose acetate is a mass of material, which needs to be crushed before blending, and the particle size of crushed cellulose acetate is generally less than 500µm, preferably less than 200µm, and more preferably less than 60µm.

The addition amount of cellulose acetate generally accounts for 1%-60% of the blend, preferably 2%-50%, and more preferably 5%-30%.

The degradable material includes, but is not limited to, aliphatic-aromatic copolyester, microbial synthetic polyester, polycaprolactone and polypropylene carbonate.

The aliphatic-aromatic copolyester is prepared by copolymerizing aliphatic diacid and aromatic diacid with aromatic glycol. Among them, the aliphatic diacid is straight-chain or branched chain aliphatic diacid containing 2-18 carbon atoms, including ethane dioic acid, malonic acid, succinic acid, etc.; the aromatic diacid includes terephthalic acid, phthalic acid, isophthalic acid, naphthalic acid, and diphenol diacid, and the aromatic glycol is dihydric alcohol containing 2-10 carbon atoms, including ethylene glycol, propylene glycol, butylene glycol, etc. Preferably, the aliphatic aromatic group is poly-butane glycol succinate (PBS), or poly-butane glycol succinate adipate (PBSA), and the aliphatic-aromatic copolyester may be a copolyester of butylene glycol adipate and butylene terephthalate (PBAT).

The molecular weight of aliphatic aromatic copolyester suitable for the present invention is at least greater than 10,000 Dalton, preferably greater than 20,000 Dalton.

Polyhydroxyalkanoate (PHA) is intracellular polyester synthesized by microorganism, which is a natural degradable polymer biomaterial. It may be poly-hydroxybutyl ester (PHB), poly-hydroxybutyrate-hydroxy valeric acid copolyester, etc.

The polycaprolactone is a thermoplastic crystalline polyester obtained by performing ring-opening polymerization on caprolactone, which has good biodegradability. The molecular weight of polycaprolactone in the present invention is greater than 20,000 Dalton, preferably greater than 50,000 Dalton.

The polypropylene carbonate (PPC) is a polyester obtained by performing copolymerization reaction on carbon dioxide and epoxide under the action of a catalyst. The epoxide includes, but is not limited to, ethylene oxide, propylene oxide, epoxy cyclohexane and other compounds.

The molecular weight of the propylene carbonate ranges from 10,000 to 1,000,000, preferably 20,000-500,000, and more preferably 20,000-200,000.

The addition amount of the biodegradable polyester is preferably 50%-95%, and more preferably 60%-90%.

The compatibilizer with active multifunctional groups, including epoxy groups, anhydride, oxazoline, isocyanate and the likes, may be an additive that reacts with the hydroxyl group of the cellulose acetate and the end hydroxyl group of the polyester through reaction extrusion, may also be an additive that catalyzes transesterification, and may further be a peroxidation catalyst that forms free radicals through catalyzation, thereby improving the polarity of cellulose acetate and polyester, enhancing interfacial compatibility, and achieving the purpose of enhancing the mechanical performance of blends.

The active compatibilizer containing epoxy and maleic anhydride may be prepared by performing copolymerization on ethylene, propylene, styrene and methacrylic acid glycidyl ether, or alkene units containing maleic anhydride, oxazoline and isocyanate.

The transesterification compatibilizer may be an organic acid catalyst and organometallic compound catalyst and the likes, including, but not limited to, methane sulfonic acid, benzene sulfonic acid, p-toluene sulfonic acid, sodium methoxide, sodium ethoxide, phthalate esters (such as tetra butyl titanate), titanocene catalysts (such as titanocene dichloride), samarium trifluoromethyl sulfonate and organotin catalysts (such as dibutyltin oxide, butyl tin trichloride, tributyltin chloride) and the likes.

The free radical catalyst may be benzoyl peroxide, tert-butyl benzoyl peroxide, methyl ethyl ketone peroxide and the likes.

The addition amount of the compatibilizer is generally 0.1%-10%, preferably 0.2%-5%, and more preferably 0.5%-3%.

A plasticizer may also be added to co-function with the compatibilizer and improve a compatibilization effect. The plasticizer includes one or a variety of combinations of phthalate, glycerol ester, citrates, acetyl citrate, ethylene glycol oligomer, propylene glycol oligomer, ethylene glycol propylene glycol copolymer, epoxy vegetable oil ester and other aliphatic ester plasticizers.

The addition amount of the plasticizer is generally 1%-50%, preferably 1%-40%, and more preferably 1%-30%.

An antioxidant, a heat stabilizer and a UV light stabilizer may also be added according to needs. The antioxidant is widely used in polymer materials to prevent polymer materials from losing strength and toughness due to oxidative degradation, including tetra[(β-(3,5-di-tert-butyl-4-hydroxyphenyl)propionate] pentaerythritol ester (Antioxidant 1010), 3-(3,5-di-tert-butyl-4-hydroxyphenyl) propionate n-octadecanol ester (Antioxidant 1076), tri (2,4-di-tert-butylphenyl) phosphite ester (Antioxidant 168), 4,4'-thiobis(6-tert-butyl-3-methylphenol) (Antioxidant 300), N,N'-bis-(3-(35-di-tert-butyl-4-hydroxyphenyl)propionyl)hexanediamine (Antioxidant 1098), and 2,2'-methylenebis(4-methyl-6-tert-butylphenol) (Antioxidant 2246). The heat stabilizers includes barium stearate, barium laurate, barium ricinate, calcium stearate, calcium ricinate, zinc stearate and magnesium stearate. The light stabilizer is an additive for polymer products (such as plastics, rubber, coatings and synthetic fiber), which can shield or absorb the energy of ultraviolet rays, quench singlet oxygen and decompose hydroperoxide into inactive substances, so that the polymer can eliminate or diminish the possibility of photochemical reaction under the radiation of light, prevent or delay the process of photoaging, so as to achieve the purpose of prolonging the service life of polymer products. It may be o-hydroxy benzophenone, benzotriazole, salicylate, triazine and substituted acrylonitrile.

Other additives including a food-grade pigment or a dye may be added to the above biodegradable material. The food-grade pigment includes monascu, chlorophyll, curcumin, and carotene. The environmental dye refers to a dye conforming to REACH registration, such as a Kayalon POlyesters LW disperse dye from Nippon Kayaku Corporation, a Cibacet EL disperse dye from Huntsman Corporation, a Compact Eco-CC-E (Eco-CC-S) disperse dye from BASF Corporation, and a DianixAC-E (UPH) dye from Dystar Corporation. Dye molecules can be completely dissolved in a mixed material or there is no phase separation after mixing.

Another aspect of the present invention provides a method of preparing the biodegradable material, including the steps of:
S1, obtaining cellulose acetate and at least one degradable polyester material;
S2, obtaining at least one compatibilizer that can improve interfacial compatibility between cellulose acetate and degradable polyester;
S3, mixing the cellulose acetate and the polyester material obtained from step S1 with the compatibilizer obtained from step S2; and
S4, extruding a mixture formed in step S3 through a blending reaction to obtain a filament containing biodegradable materials.

The preparation method may also include the step of stretching, cooling, and pelletizing the filament.

The extrusion through a blending reaction generally includes the step of drying the above cellulose acetate crushed into of a certain particle size, then adding a certain proportion of biodegradable polyester and a certain proportion of compatibilizer into it, mixing them evenly on a mixer, then adding the above-mentioned powder to a twin-screw extruder to perform plasticization, stretching, cooling, and pelletizing, so as to form plasticized particles, next discharging small molecules produced from a reaction through a vacuum exhaust hole. The melt index range of the above particles is 80-400g/10min (210°C, 10kg weight). The softening temperature of the above particles ranges from 40°C to 120°C, preferably from 50°C to 100°C. Of the particles used to blow a film the tensile strength is greater than 10MPa and the break elongation is greater than 100%.

Yet another aspect of the present invention provides an application of the biodegradable material. The biodegradable material is used to prepare a thin film, improving the polarity of cellulose acetate and polyester, enhancing interfacial compatibility, and achieving the purpose of enhancing the mechanical performance of blends. For example, of the cellulose acetate and the biodegradable blended-modified material prepared by using the biodegradable material, the tensile strength is greater than 10MPa, the break elongation is greater than 200%, and the modulus of elasticity is greater than 100MPa.

The above degradable particles can be made into films through a blow molding process.

Melt the plasticized particles on a single-screw extruder at a melting temperature of 180°C-230°C, preferably 190°C-220°C, and more preferably 200°C-210°C. Adopt a flat extrusion blowing method and use a right-angle machine head, that is, make the discharge direction of the machine head perpendicular to an extruder, pull an extrusion tube ring upwards to a certain distance, then clamp it with a collapsing plate, blow the extrusion tube into a bubble tube with the compressed air introduced from the bottom at an pressure of 0.2-0.6MPa, and control its transverse size by means of the amount of the compressed air and control its longitudinal size by means of traction speed, finally cool and shape the bubble tube to give a blown film. An extension ratio is calculated based on the thickness of a film at the extrusion tube and the thickness of a finished film, thus the extension ratio ranges from 1:1 to 50:1, preferably 2:1-40:1, and more preferably 5:1-30:1. The film thickness ranges from 20 microns to 800 microns, preferably from 240 microns to 500 microns, and more preferably from 50 microns to 250 microns.

The present invention provides a biodegradable material and a film product, including one or more of cellulose acetate and biodegradable blended-modified polyester, and a compatibilizer that can improve the compatibility between cellulose acetate and degradable polyester. As a result of adopting the above-mentioned technical solutions, the beneficial effects obtained from the present invention are as follows. The compatibilizer is an additive containing active multifunctional groups, which can react with cellulose acetate and degradable polyester, enhance the compatibility between the two, and improve mechanical performance. Through comparison, it is found that the addition of compatibilizer brings the beneficial effects of improving tensile strength of blends, increasing Young's modulus, and maintaining break elongation. The products obtained from the present invention has wide applicability and can be applied to packaging films, including food packaging and other fields.

The biodegradable particles mentioned above can also be applied to products that are processed through conventional thermal processes including but not limited to extrusion, injection molding, blow molding or blister molding.

### DETAILED DESCRIPTION OF SOME EMBODIMENTS

We shall further describe the present invention in combination with examples as follows.

### EXAMPLE 1

1. Crush cellulose acetate into a powder having a particle size of 10µm in a grinder (degree of acetyl substitution as 2.45, intrinsic viscosity as 1.60dL/g, number-average molecular weight as 39000, weight-average molecular weight as 65000, Mw/Mn as 1.7).
2. Mix 5 parts of cellulose acetate powder dried at 120°C for 1 hour with 95 parts of copolyester of butylene glycol adipate and butylene terephthalate (PBAT), 5 parts of maleic anhydride compatibilizers grafted with PBAT (maleic anhydride content as 1 wt.%) and 1 part of antioxidant 1010 evenly on a mixer.
3. Add the above powders to a twin-screw extruder to plasticize and extrude them, wherein the temperatures of the 6 heating zones of the twin-screw extruder are set to be 130/150/165/180/190/195, respectively, the head temperature is set to be 200°C, the pressure of the extruder head is set as 0.2-0.4Mpa, and the screw speed is set to be 50-90rpm; stretch, cool, and pelletize the filament extruded out to manufacture modified degradable cellulose acetate particles.

### EXAMPLE 2

1. Crush cellulose acetate into a powder having a particle size of 10µm in a grinder (degree of acetyl substitution as 2.45, intrinsic viscosity as 1.60dL/g, number-average molecular weight as 39000, weight-average molecular weight as 65000, Mw/Mn as 1.7).
2. Mix 10 parts of cellulose acetate powder dried at 120°C for 1 hour with 95 parts of copolyester of butylene glycol adipate and butylene terephthalate (PBAT), 5 parts of maleic anhydride compatibilizers grafted with PBAT (maleic anhydride content as 1 wt.%) and 1 part of antioxidant 1010 evenly on a mixer.
3. Add the above powders to a twin-screw extruder to plasticize and extrude them, wherein the temperatures of the 6 heating zones of the twin-screw extruder are set to be 130/150/165/180/190/195, respectively, the head temperature is set to be 200°C, the pressure of the extruder head is set as 0.2-0.4Mpa, and the screw speed is set to be 50-90rpm; stretch, cool, and pelletize the filament extruded out to manufacture modified degradable cellulose acetate particles.

### EXAMPLE 3

1. Crush cellulose acetate into a powder having a particle size of 10µm in a grinder (degree of acetyl substitution as 2.45, intrinsic viscosity as 1.60dL/g, number-average molecular weight as 39000, weight-average molecular weight as 65000, Mw/Mn as 1.7).
2. Mix 15 parts of cellulose acetate powder dried at 120°C for 1 hour with 85 parts of copolyester of butylene glycol adipate and butylene terephthalate (PBAT), 5 parts of maleic anhydride compatibilizers grafted with PBAT (maleic anhydride content as 1 wt.%) and 1 part of antioxidant 1010 evenly on a mixer.
3. Add the above powders to a twin-screw extruder to plasticize and extrude them, wherein the temperatures of the 6 heating zones of the twin-screw extruder are set to be 130/150/165/180/190/195, respectively, the head temperature is set to be 200°C, the pressure of the extruder head is set as 0.2-0.4Mpa, and the screw speed is set to be 50-90rpm; stretch, cool, and pelletize the filament extruded out to manufacture modified degradable cellulose acetate particles.

### EXAMPLE 4

1. Crush cellulose acetate into a powder having a particle size of 10µm in a grinder (degree of acetyl substitution as 2.45, intrinsic viscosity as 1.60dL/g, number-average molecular weight as 39000, weight-average molecular weight as 65000, Mw/Mn as 1.7).
2. Mix 20 parts of cellulose acetate powder dried at 120°C for 1 hour with 80 parts of copolyester of butylene glycol adipate and butylene terephthalate (PBAT), 5 parts of maleic anhydride compatibilizers grafted with PBAT (maleic anhydride content as 1 wt.%) and 1 part of antioxidant 1010 evenly on a mixer.
3. Add the above powders to a twin-screw extruder to plasticize and extrude them, wherein the temperatures of the 6 heating zones of the twin-screw extruder are set to be 130/150/165/180/190/195, respectively, the head temperature is set to be 200°C, the pressure of the extruder head is set as 0.2-0.4Mpa, and the screw speed is set to be 50-90rpm; stretch, cool, and pelletize the filament extruded out to manufacture modified degradable cellulose acetate particles.

### EXAMPLE 5

1. Crush cellulose acetate into a powder having a particle size of 10µm in a grinder (degree of acetyl substitution as 2.45, intrinsic viscosity as 1.60dL/g, number-average molecular weight as 39000, weight-average molecular weight as 65000, Mw/Mn as 1.7).
2. Mix 5 parts of cellulose acetate powder dried at 120°C for 1 hour with 95 parts of copolyester of butylene glycol adipate and butylene terephthalate (PBAT), 5 parts of glycidyl methacrylate compatibilizers grafted with PBAT (glycidyl methacrylate content as 1 wt.%) and 1 part of antioxidant 1010 evenly on a mixer.
3. Add the above powders to a twin-screw extruder to plasticize and extrude them, wherein the temperatures of the 6 heating zones of the twin-screw extruder are set to be 130/150/165/180/190/195, respectively, the head temperature is set to be 200°C, the pressure of the extruder head is set as 0.2-0.4Mpa, and the screw speed is set to be 50-90rpm; stretch, cool, and pelletize the filament extruded out to manufacture modified degradable cellulose acetate particles.

### EXAMPLE 6

1. Crush cellulose acetate into a powder having a particle size of 10µm in a grinder (degree of acetyl substitution as 2.45, intrinsic viscosity as 1.60dL/g, number-average molecular weight as 39000, weight-average molecular weight as 65000, Mw/Mn as 1.7).
2. Mix 10 parts of cellulose acetate powder dried at 120°C for 1 hour with 90 parts of copolyester of butylene glycol adipate and butylene terephthalate (PBAT), 5 parts of glycidyl methacrylate compatibilizers grafted with PBAT (glycidyl methacrylate content as 1 wt.%) and 1 part of antioxidant 1010 evenly on a mixer.
3. Add the above powders to a twin-screw extruder to plasticize and extrude them, wherein the temperatures of the 6 heating zones of the twin-screw extruder are set to be 130/150/165/180/190/195, respectively, the head temperature is set to be 200°C, the pressure of the extruder head is set as 0.2-0.4Mpa, and the screw speed is set to be 50-90rpm; stretch, cool, and pelletize the filament extruded out to manufacture modified degradable cellulose acetate particles.

### EXAMPLE 7

1. Crush cellulose acetate into a powder having a particle size of 10µm in a grinder (degree of acetyl substitution as 2.45, intrinsic viscosity as 1.60dL/g, number-average molecular weight as 39000, weight-average molecular weight as 65000, Mw/Mn as 1.7).
2. Mix 15 parts of cellulose acetate powder dried at 120°C for 1 hour with 85 parts of copolyester of butylene glycol adipate and butylene terephthalate (PBAT), 5 parts of glycidyl methacrylate compatibilizers grafted with PBAT (glycidyl methacrylate content as 1 wt.%) and 1 part of antioxidant 1010 evenly on a mixer.
3. Add the above powders to a twin-screw extruder to plasticize and extrude them, wherein the temperatures of the 6 heating zones of the twin-screw extruder are set to be 130/150/165/180/190/195, respectively, the head temperature is set to be 200°C, the pressure of the extruder head is set as 0.2-0.4Mpa, and the screw speed is set to be 50-90rpm; stretch, cool, and pelletize the filament extruded out to manufacture modified degradable cellulose acetate particles.

### EXAMPLE 8

1. Crush cellulose acetate into a powder having a particle size of 10µm in a grinder (degree of acetyl substitution as 2.45, intrinsic viscosity as 1.60dL/g, number-average molecular weight as 39000, weight-average molecular weight as 65000, Mw/Mn as 1.7).
2. Mix 20 parts of cellulose acetate powder dried at 120°C for 1 hour with 80 parts of copolyester of butylene glycol adipate and butylene terephthalate (PBAT), 5 parts of maleic anhydride compatibilizers grafted with PBAT (maleic anhydride content as 1 wt.%) and 1 part of antioxidant 1010 evenly on a mixer.
3. Add the above powders to a twin-screw extruder to plasticize and extrude them, wherein the temperatures of the 6 heating zones of the twin-screw extruder are set to be 130/150/165/180/190/195, respectively, the head temperature is set to be 200°C, the pressure of the extruder head is set as 0.2-0.4Mpa, and the screw speed is set to be 50-90rpm; stretch, cool, and pelletize the filament extruded out to manufacture modified degradable cellulose acetate particles.

### EXAMPLE 9

1. Crush cellulose acetate into a powder having a particle size of 10µm in a grinder (degree of acetyl substitution as 2.45, intrinsic viscosity as 1.60dL/g, number-average molecular weight as 39000, weight-average molecular weight as 65000, Mw/Mn as 1.7).
2. Mix 15 parts of cellulose acetate powder dried at 120°C for 1 hour with 85 parts of copolyester of butylene glycol adipate and butylene terephthalate (PBAT), 5 parts of maleic anhydride compatibilizers grafted with acrylonitrile-styrene copolymer (SAN) (maleic anhydride content as 20 wt.%) and 1 part of antioxidant 1010 evenly on a mixer.
3. Add the above powders to a twin-screw extruder to plasticize and extrude them, wherein the temperatures of the 6 heating zones of the twin-screw extruder are set to be 130/150/165/180/190/195, respectively, the head temperature is set to be 200°C, the pressure of the extruder head is set as 0.2-0.4Mpa, and the screw speed is set to be 50-90rpm; stretch, cool, and pelletize the filament extruded out to manufacture modified degradable cellulose acetate particles.

### EXAMPLE 10

1. Crush cellulose acetate into a powder having a particle size of 10µm in a grinder (degree of acetyl substitution as 2.45, intrinsic viscosity as 1.60dL/g, number-average molecular weight as 39000, weight-average molecular weight as 65000, Mw/Mn as 1.7).
2. Mix 15 parts of cellulose acetate powder dried at 120°C for 1 hour with 85 parts of copolyester of butylene glycol adipate and butylene terephthalate (PBAT), 1 part of glycidyl methacrylate compatibilizers grafted with acrylonitrile-styrene copolymer (SAN) (glycidyl methacrylate content as 2 wt.%) and 1 part of antioxidant 1010 evenly on a mixer.
3. Add the above powders to a twin-screw extruder to plasticize and extrude them, wherein the temperatures of the 6 heating zones of the twin-screw extruder are set to be 130/150/165/180/190/195, respectively, the head temperature is set to be 200°C, the pressure of the extruder head is set as 0.2-0.4Mpa, and the screw speed is set to be 50-90rpm; stretch, cool, and pelletize the filament extruded out to manufacture modified degradable cellulose acetate particles.

### EXAMPLE 11

1. Crush cellulose acetate into a powder having a particle size of 10µm in a grinder (degree of acetyl substitution as 2.45, intrinsic viscosity as 1.60dL/g, number-average molecular weight as 39000, weight-average molecular weight as 65000, Mw/Mn as 1.7).
2. Mix 15 parts of cellulose acetate powder dried at 120°C for 1 hour with 85 parts of copolyester of butylene glycol adipate and butylene terephthalate (PBAT), 1 part of glycidyl methacrylate compatibilizers grafted with polystyrene (glycidyl methacrylate content as 20 wt.%) and 1 part of antioxidant 1010 evenly on a mixer.
3. Add the above powders to a twin-screw extruder to plasticize and extrude them, wherein the temperatures of the 6 heating zones of the twin-screw extruder are set to be 130/150/165/180/190/195, respectively, the head temperature is set to be 200°C, the pressure of the extruder head is set as 0.2-0.4Mpa, and the screw speed is set to be 50-90rpm; stretch, cool, and pelletize the filament extruded out to manufacture modified degradable cellulose acetate particles.

### EXAMPLE 12

1. Crush cellulose acetate into a powder having a particle size of 10µm in a grinder (degree of acetyl substitution as 2.45, intrinsic viscosity as 1.60dL/g, number-average molecular weight as 39000, weight-average molecular weight as 65000, Mw/Mn as 1.7).
2. Mix 15 parts of cellulose acetate powder dried at 120°C for 1 hour with 85 parts of copolyester of butylene glycol adipate and butylene terephthalate (PBAT), 5 parts of glycidyl methacrylate compatibilizers grafted with poly(ethylene-propylene-octene) (glycidyl methacrylate content as 2 wt.%) and 1 part of antioxidant 1010 evenly on a mixer.
3. Add the above powders to a twin-screw extruder to plasticize and extrude them, wherein the temperatures of the 6 heating zones of the twin-screw extruder are set to be 130/150/165/180/190/195, respectively, the head temperature is set to be 200°C, the pressure of the extruder head is set as 0.2-0.4Mpa, and the screw speed is set to be 50-90rpm; stretch, cool, and pelletize the filament extruded out to manufacture modified degradable cellulose acetate particles.

### EXAMPLE 13

1. Crush cellulose acetate into a powder having a particle size of 10µm in a grinder (degree of acetyl substitution as 2.45, intrinsic viscosity as 1.60dL/g, number-average molecular weight as 39000, weight-average molecular weight as 65000, Mw/Mn as 1.7).
2. Mix 15 parts of cellulose acetate powder dried at 120°C for 1 hour with 85 parts of poly-butane glycol succinate (PBS), 5 parts of glycidyl methacrylate compatibilizers grafted with PBAT (glycidyl methacrylate content as 1 wt.%) and 1 part of antioxidant 1010 evenly on a mixer.
3. Add the above powders to a twin-screw extruder to plasticize and extrude them, wherein the temperatures of the 6 heating zones of the twin-screw extruder are set to be 130/150/165/180/190/195, respectively, the head temperature is set to be 200°C, the pressure of the extruder head is set as 0.2-0.4Mpa, and the screw speed is set to be 50-90rpm; stretch, cool, and pelletize the filament extruded out to manufacture modified degradable cellulose acetate particles.

### EXAMPLE 14

1. Crush cellulose acetate into a powder having a particle size of 10µm in a grinder (degree of acetyl substitution as 2.45, intrinsic viscosity as 1.60dL/g, number-average molecular weight as 39000, weight-average molecular weight as 65000, Mw/Mn as 1.7).
2. Mix 15 parts of cellulose acetate powder dried at 120°C for 1 hour with 85 parts of polycaprolactone (PCL), 5 parts of glycidyl methacrylate compatibilizers grafted with PBAT (glycidyl methacrylate content as 1 wt.%) and 1 part of antioxidant 1010 evenly on a mixer.
3. Add the above powders to a twin-screw extruder to plasticize and extrude them, wherein the temperatures of the 6 heating zones of the twin-screw extruder are set to be 130/150/165/180/190/195, respectively, the head temperature is set to be 200°C, the pressure of the extruder head is set as 0.2-0.4Mpa, and the screw speed is set to be 50-90rpm; stretch, cool, and pelletize the filament extruded out to manufacture modified degradable cellulose acetate particles.

### EXAMPLE 15

1. Crush cellulose acetate into a powder having a particle size of 10µm in a grinder (degree of acetyl substitution as 2.45, intrinsic viscosity as 1.60dL/g, number-average molecular weight as 39000, weight-average molecular weight as 65000, Mw/Mn as 1.7).
2. Mix 15 parts of cellulose acetate powder dried at 120°C for 1 hour with 85 parts of copolyester of butylene glycol adipate and butylene terephthalate (PBAT), 5 parts of Triacetin and 1 part of antioxidant 1010 evenly on a mixer.
3. Add the above powders to a twin-screw extruder to plasticize and extrude them, wherein the temperatures of the 6 heating zones of the twin-screw extruder are set to be 130/150/165/180/190/195, respectively, the head temperature is set to be 200°C, the pressure of the extruder head is set as 0.2-0.4Mpa, and the screw speed is set to be 50-90rpm; stretch, cool, and pelletize the filament extruded out to manufacture modified degradable cellulose acetate particles.

In order to explain the beneficial effect of the compatibilizer in improving cellulose acetate and bio-based polyester, we have made comparisons in the following controls.

### CONTROL 1

Add PBAT to a twin-screw extruder to plasticize and extrude it, wherein the temperatures of the 6 heating zones of the twin-screw extruder are set to be 130/150/165/180/190/195, respectively, the head temperature is set to be 200°C, the pressure of the extruder head is set as 0.2-0.4Mpa, and the screw speed is set to be 50-90 rpm; stretch, cool, and pelletize the filament extruded out to manufacture modified degradable cellulose acetate particles.

In control 1, the used PBAT results in low modulus of elasticity, soft processed films, inconvenience to use, and poor degradability of polyester.

### CONTROL 2

1. Crush cellulose acetate into a powder having a particle size of 10µm in a grinder (degree of acetyl substitution as 2.45, intrinsic viscosity as 1.60dL/g, number-average molecular weight as 39000, weight-average molecular weight as 65000, Mw/Mn as 1.7).
2. Mix 15 parts of cellulose acetate powder dried at 120°C for 1 hour with 85 parts of copolyester of butylene glycol adipate and butylene terephthalate (PBAT) and 1 part of antioxidant 1010 evenly on a mixer.
3. Add the above powders to a twin-screw extruder to plasticize and extrude them, wherein the temperatures of the 6 heating zones of the twin-screw extruder are set to be 130/150/165/180/190/195, respectively, the head temperature is set to be 200°C, the pressure of the extruder head is set as 0.2-0.4Mpa, and the screw speed is set to be 50-90rpm; stretch, cool, and pelletize the filament extruded out to manufacture modified degradable cellulose acetate particles.

Compared with control 1, in control 2 CA increases and mechanical performance improves, especially modulus of elasticity is high, PBAT and CA are quite different in polarity, but general in compatibility. The present invention improves the compatibility of PBAT and CA by way of adding the compatibilizer, and raises the modulus of elasticity of the material under the premise of properly maintaining the fracture productivity of the material.

### CONTROL 3

1. Crush cellulose acetate into a powder having a particle size of 10µm in a grinder (degree of acetyl substitution as 2.45, intrinsic viscosity as 1.60dL/g, number-average molecular weight as 39000, weight-average molecular weight as 65000, Mw/Mn as 1.7).
2. Mix 15 parts of cellulose acetate powder dried at 120°C for 1 hour with 85 parts of polylactic acid (PLA), 5 parts of glycidyl methacrylate compatibilizers grafted with PBAT (glycidyl methacrylate content as 1 wt.%) and 1 part of antioxidant 1010 evenly on a mixer.
3. Add the above powders to a twin-screw extruder to plasticize and extrude them, wherein the temperatures of the 6 heating zones of the twin-screw extruder are set to be 130/150/165/180/190/195, respectively, the head temperature is set to be 200°C, the pressure of the extruder head is set as 0.2-0.4Mpa, and the screw speed is set to be 50-90rpm; stretch, cool, and pelletize the filament extruded out to manufacture modified degradable cellulose acetate particles.

Control 3 uses PLA as a modifier, but the raw material of PLA is manufactured through fermentation of corn starch, resulting in scrambling for grain with the public, and the degradation performance of PLA is not as good as the cellulose acetate used in the present invention.

### CONTROL 4

1. Crush cellulose acetate into a powder having a particle size of 10µm in a grinder (degree of acetyl substitution as 2.45, intrinsic viscosity as 1.60dL/g, number-average molecular weight as 39000, weight-average molecular weight as 65000, Mw/Mn as 1.7).
2. Mix 50 parts of cellulose acetate powder dried at 120°C for 1 hour with 50 parts of copolyester of butylene glycol adipate and butylene terephthalate (PBAT) evenly on a mixer.
3. Add the above powders to a twin-screw extruder to plasticize and extrude them, wherein the temperatures of the 6 heating zones of the twin-screw extruder are set to be 130/150/165/180/190/195, respectively, the head temperature is set to be 200°C, the pressure of the extruder head is set as 0.2-0.4Mpa, and the screw speed is set to be 50-90rpm; stretch, cool, and pelletize the filament extruded out to manufacture modified degradable cellulose acetate particles.

When the CA content in control 4 reaches 50% or more, the fluidity of the material becomes poor, and it is not suitable for blown film processing.

**Table 1 Performance of blended modified cellulose acetate particles**

| sample | component | sample ratio (mass ratio) | tensile strength (MPa) | break elongation (%) | modulus of elasticity (MPa) | melt index (g/10min) |
|---|---|---|---|---|---|---|
| Example 1 | PBAT/CA | 95/5 | 17.7 | 550.3 | 91.6 | 15.9 |
| Example 2 | PBAT/CA | 90/10 | 16.3 | 483.1 | 98.8 | 15.0 |
| Example 3 | PBAT/CA | 85/15 | 12.8 | 346.7 | 132.2 | 12.0 |
| Example 4 | PBAT/CA | 80/20 | 11.1 | 250.2 | 136.6 | 10.2 |
| Example 5 | PBAT/CA | 95/5 | 20.0 | 514.4 | 92.8 | 12.0 |
| Example 6 | PBAT/CA | 90/10 | 17.5 | 454.0 | 102.3 | 10.1 |
| Example 7 | PBAT/CA | 85/15 | 14.6 | 356.2 | 125.6 | 9.4 |
| Example 8 | PBAT/CA | 80/20 | 11.3 | 237.3 | 149.9 | 8.0 |
| Example 9 | PBAT/CA | 85/15 | 13.4 | 310.1 | 115.0 | 9.2 |
| Example 10 | PBAT/CA | 85/15 | 13.9 | 318.0 | 106.6 | 8.7 |
| Example 11 | PBAT/CA | 85/15 | 12.5 | 278.4 | 122.6 | 8.3 |
| Example 12 | PBAT/CA | 85/15 | 11.5 | 327.6 | 88.8 | 6.8 |
| Example 13 | PBS/CA | 85/15 | 26.9 | 12.5 | 581.5 | 17.1 |
| Example 14 | PCL/CA | 85/15 | 13.7 | 4.9 | 449.3 | 22.2 |
| Example 15 | PBAT/CA | 85/15 | 15.1 | 314.3 | 120.2 | 26.7 |
| Control 1 | PBAT/CA | 100/0 | 21.8 | 573.1 | 65.1 | / |
| Control 2 | PBAT/CA | 85/15 | 13.0 | 325.2 | 119.9 | 15.4 |
| Control 3 | PBAT/PLA | 85/15 | 17.8 | 346.9 | 149.2 | 14.4 |
| Control 4 | PBAT/CA | 50/50 | / | / | / | 20(210°C, 10kg weight) |

For the test performance of the above degraded particles, the tensile performance is tested according to GB 13022-91, the general test conditions of the melt indexes are as follows, 190°C and a 2.16kg weight; the softening point is tested according to GBT1633, the heating rate is 5°C/min, and the test results are shown in Table 1.

Through comparison, it was found that the addition of compatibilizer had the beneficial effects of improving the tensile strength of the blend, increasing the Young's modulus and maintaining the elongation at break. Through comparison, it is found that the addition of the compatibilizer has the beneficial effects of improving the tensile strength, increasing the Young's modulus and maintaining the break elongation.

The above relevant explanations and the descriptions to the examples make it easy to understand and apply the present invention for a person skilled in the art. It is clear that a person skilled in the art can easily make various modifications to these contents and apply the general principle described herein to other examples without doing creative work. Therefore, the present invention is not limited to the above relevant explanations and the descriptions to the examples, and the improvements and modifications made by a person skilled in the art according to the disclosure of the present invention and not departing from the scope of the present invention should fall within the protection scope of the present invention.

## Claims

1. A biodegradable material comprising:
a) cellulose acetate and at least one biodegradable polyester material; and
b) at least one compatibilizer that can improve interfacial compatibility between cellulose acetate and biodegradable polyester;
wherein said compatibilizer is selected from a reagent having an active functional group,
a reagent that concurrently reacts with cellulose acetate and polyester, or
a transesterification catalyst and/or a peroxidation catalyst.

2. The biodegradable material according to claim 1, wherein a degree of substitution of said cellulose acetate is 1.5-2.8, preferably in 1.8-2.7, and more preferably in 1.9-2.6.

3. The biodegradable material according to claim 1, wherein a molecular weight of said cellulose acetate is 10,000-120,000 Dalton, preferably 20,000-100,000 Dalton, and more preferably 25,000-90,000 Dalton.

4. The biodegradable material according to claim 1, wherein an intrinsic viscosity of said cellulose acetate is 1.2-1.8 dL/g, preferably 1.25-1.75 dL/g, and more preferably 1.35-1.7 dL/g.

5. The biodegradable material according to claim 1, wherein a particle size of said cellulose acetate is less than 500µm, preferably less than 200µm, and more preferably less than 60µm.

6. The biodegradable material according to claim 1, wherein a content of said cellulose acetate accounts for 1%-60% of a blend, preferably 2%-50%, and more preferably 5%-30%.

7. The biodegradable material according to claim 1, wherein said degradable polyester material comprises, but is not limited to, aliphatic-aromatic copolyester, microbial synthetic polyester, polycaprolactone and polypropylene carbonate.

8. The biodegradable material according to claim 7, wherein the aliphatic-aromatic copolyester is prepared by copolymerizing aliphatic diacid and aromatic diacid with aromatic glycol;
among them, the aliphatic diacid is straight-chain or branched chain aliphatic diacid containing 2-18 carbon atoms, including ethane dioic acid, malonic acid and succinic acid; the aromatic diacid includes terephthalic acid, phthalic acid, isophthalic acid, naphthalic acid, and diphenol diacid; and the aromatic glycol is dihydric alcohol containing 2-10 carbon atoms, including ethylene glycol, propylene glycol and butylene glycol;
an aliphatic aromatic group is preferably poly-butane glycol succinate, or poly-butane glycol succinate adipate, and the aliphatic-aromatic copolyester is a copolyester of butylene glycol adipate and/or butylene terephthalate.

9. The biodegradable material according to claim 1, wherein said polyester material comprises, but is not limited to, poly-hydroxy butyl ester, or poly-hydroxybutyrate-hydroxy valeric acid copolyester.

10. The biodegradable material according to claim 9, wherein polypropylene carbonate is a polyester obtained by performing copolymerization reaction on carbon dioxide and epoxide,
the epoxide includes, but is not limited to, ethylene oxide, propylene oxide and epoxy cyclohexane.

11. The biodegradable material according to claim 1, wherein an addition amount of said polyester material is preferably 50%-95%, and more preferably 60%-90%.

12. The biodegradable material according to claim 1, wherein said compatibilizer is selected from one or more of
an additive that reacts with a hydroxyl group of said cellulose acetate and an end hydroxyl group of said polyester through reaction extrusion;
an organic acid and organometallic compound additive that catalyzes transesterification; and
a peroxidation catalyst that forms free radicals through catalyzation.

13. The biodegradable material according to claim 1, wherein said compatibilizer with active multifunctional groups is a compatibilizer containing epoxy and maleic anhydride, which is preferably prepared by performing copolymerization on ethylene, propylene, styrene and methacrylic acid glycidyl ether, or alkene units containing maleic anhydride, oxazoline and isocyanate.

14. The biodegradable material according to claim 1, wherein said compatibilizer is an organic acid catalyst and organometallic compound catalyst, including, but not limited to, methane sulfonic acid, benzene sulfonic acid, p-toluene sulfonic acid, sodium methoxide, sodium ethoxide, phthalate ester, titanocene catalysts, samarium trifluoromethyl sulfonate and/or organotin catalysts.

15. The biodegradable material according to claim 1, wherein said compatibilizer is a peroxidation catalyst, including, but not limited to, benzoyl peroxide, tert-butyl benzoyl peroxide and methyl ethyl ketone peroxide.

16. The biodegradable material according to claim 1, wherein an addition amount of said compatibilizer is 0.1%-10%, preferably 0.2%-5%, and more preferably 0.5%-3%.

17. The biodegradable material according to claim 1, wherein the material further comprises a plasticizer, said plasticizer comprises one or a variety of combinations of phthalate, glycerol ester, citrates, acetyl citrate, ethylene glycol oligomer, propylene glycol oligomer, ethylene glycol propylene glycol copolymer, epoxy vegetable oil ester and other aliphatic ester plasticizers; an addition amount of said plasticizer is 1%-50%, preferably 1%-40%, and more preferably 1%-30%.

18. The biodegradable material according to claim 1, wherein the material contains an antioxidant, a heat stabilizer, a UV light stabilizer, a food-grade pigment and/or a dye.

19. A method of preparing the biodegradable material according to any one of claims 1-18, comprising the steps of
S1, obtaining cellulose acetate and at least one degradable polyester material;
S2, obtaining at least one compatibilizer that can improve interfacial compatibility between cellulose acetate and degradable polyester;
S3, mixing the cellulose acetate and the polyester material obtained from step S1 with the compatibilizer obtained from step S2; and
S4, extruding a mixture formed in step S3 through a blending reaction to obtain a filament containing biodegradable materials.

20. The method according to claim 19, wherein it further comprises a step of stretching, cooling, and pelletizing the filament.

21. An application of the biodegradable material according to any one of claims 1-18, using the biodegradable material to prepare a thin film, so as to improve polarity of cellulose acetate and polyester, enhance interfacial compatibility, and achieve a purpose of enhancing mechanical performance of blends.

22. An application of the biodegradable material according to any one of claims 1-18, applying the biodegradable material to a product that is processed through extrusion, injection molding, blow molding or blister molding, so as to improve polarity of cellulose acetate and polyester, enhance interfacial compatibility, and achieve a purpose of enhancing mechanical performance of blends.

23. An application of the biodegradable material according to any one of claims 1-18, using the biodegradable material to prepare cellulose acetate and a biodegradable blended-modified material.

24. Cellulose acetate and a biodegradable blended-modified material, being prepared by using the biodegradable material according to any one of claims 1-18, so as to enable tensile strength to be more than 10MPa, break elongation to be more than 200%, and modulus of elasticity to be more than 100MPa.
